# EUROPEAN PATENT SPECIFICATION

(11) **EP 2 552 197 B1**
(45) Date of publication and mention of the grant of the patent: **26.11.2014**
(21) Application number: 11762093.0
(22) Date of filing: 21.03.2011
(51) Int. Cl.: A01N 25/04, A01N 25/24, A01N 35/04, A01N 43/56, A01N 43/653, C08F 283/06, C08K 3/00, C08L 51/08, A01P 3/00

(54) **USE OF COPOLYMER FOR INCREASING ACTIVITY OF PESTICIDE**
VERWENDUNG VON COPOLYMEREN ZUR VERSTÄRKUNG DER AKTIVITÄT EINES PESTIZIDS
UTILISATION D'UN COPOLYMÈRE POUR AUGMENTER L'ACTIVITÉ D'UN PESTICIDE

(30) Priority: 30.03.2010 EP 10158299
(43) Date of publication of application: 06.02.2013
(73) Proprietor: BASF SE, 67056 Ludwigshafen (DE)
(72) Inventor: MERTOGLU, Murat, 67063 Ludwigshafen (DE); BECHTEL, Stefan, 67365 Schwegenheim (DE); KLAPPACH, Kristin, 67433 Neustadt (DE); NOLTE, Marc, 68165 Mannheim (DE)
(86) International application number: PCT/IB2011/051177
(87) International publication number: WO 2011/121477

(56) References cited:
- EP-A1- 2 158 922
- EP-A1- 2 158 922
- EP-A2- 0 683 979
- WO-A1-02/18526
- WO-A1-2007/051742
- WO-A1-2008/058848
- WO-A1-2009/013202
- WO-A2-2007/051743
- WO-A2-2009/103760
- US-A1- 2008 293 828

## Description

The present invention relates to an aqueous agrochemical composition comprising a pesticide, wherein the pesticide is metrafenone or difenoconazole which is suspended in the aquesous composition, and a graft copolymer obtainable by free-radical polymerization of a monomer mixture comprising i) 30 to 70% by weight of N-vinylpyrrolidone, N-vinylcaprolactam or mixtures thereof, ii) 15 to 35% by weight of vinyl acetate, and iii) 10 to 35% by weight of a polyethylene glycol, wherein said composition is a suspension. It further relates to a method for preparing said composition by mixing the pesticide and the graft copolymer and to a method for controlling phytopathogenic fungi and/or undesired plant growth and/or undesired attack by insects or mites and/or for regulating the growth of plants. Combinations of preferred embodiments with other preferred embodiments are within the scope of the present invention.

Besides the optimization of the active ingredient properties, the development of an effective agent is of particular importance with regard to the industrial production and application of active ingredients. By formulating the active ingredient(s) correctly, an optimal balance must be found between properties, some of which are in conflict with each other, such as the biological activity, the toxicology, potential environmental effects, and the costs. Moreover, the formulation is a decisive factor in determining the shelf life and the user friendliness of a composition.

An efficient uptake of the active ingredient by the plant is of particular importance for the activity of an agrochemical composition. If this uptake is via the leaf, it constitutes a complex translocation process, where the active substance, for example a herbicide, must first penetrate the waxy cuticula of the leaf and subsequently diffuse, via the cuticula, into the tissue underneath, to the actual site of action.

It is generally known and agricultural practice to add certain adjuvants to formulations in order to improve the activity of the latter. Advantageously, this allows the amounts of active ingredient in the formulation to be reduced while maintaining the same activity, thereby being able to minimize costs and, if appropriate, operating within existing legislation. In individual cases, this also allows the spectrum of the active ingredient to be widened, since plants whose treatment with a specific active ingredient without addition was only possible to an unsatisfactory extent, are now capable of being subjected to such a treatment as the result of the addition of certain auxiliaries. Furthermore, the performance under adverse environmental conditions may be increased in individual cases by a suitable formulation. Of course, incompatibilities of various active ingredients in one formulation can also be avoided. Such auxiliaries are sometimes also referred to adjuvants.

Adjuvants of the surface-active type are exploited in many ways for agrochemical purposes. They can be divided into anionic, cationic, nonionic or amphoteric groups of substances. Petrol-based oils have traditionally been used as activating adjuvants. In recent times, seed extracts, natural oils and their derivatives, for example, from soybeans, sunflowers and coconut, have also been employed.

Copolymers obtainable by free-radical polymerization of N-vinyllactam, vinyl acetate and a polyether are known:
WO2007/051743 discloses the use of a copolymers obtained by free-radical polymerization of N-vinyllactam, vinyl acetate and a polyether as solubilizer for in water insoluble compounds, such as agrochemical active ingredients.
WO 2007/051742 discloses a process for the graft polymerization of a vinyl ester and a N-vinyl lactam in the presence of a polyalkylene oxide. The resulting graft polymer was used to inhibit gas hydrates and as additive in liquid detergents as well as dispersing agent for pigments.
EP 2158922 discloses the use of a graft copolymer obtained by radical polymerisation of a mixture comprising 30-80 wt.-% of *N*-vinyl lactam, 10-50 wt.-% of vinyl acetate and 10-50 wt.-% of a polyether as solubilizer.
WO 2008/058848 relates to the application of polyvinyl lactam polyvinyl acetate block copolymers as solubilizers for agents which are minimally soluble in water.
EP 0683979 discloses insecticidal and acaricidal suspension concentrate compositions of arylpyrrole compounds.

Problems associated with known adjuvants are that they often decrease the stability of the formulation, especially of suspension formulations, e.g. by increasing the viscosity or the particle size. Many known adjuvants have a high phytotoxicity, so their use is not advisable for treating vines, fruits and vegetables. There are also adjuvants, which show adverse effects on the skin of the farmers, or which are too expensive to synthesize on industrial scale. Object of the present invention was to overcome these aforementioned problems.

The object was solved by the an aqueous agrochemical composition comprising a pesticide, wherein the pesticide is metrafenone or difenoconazole which is suspended in the aqueous composition, and a graft copolymer obtained by free-radical polymerization of a monomer mixture comprising i) 30 to 70% by weight of N-vinylpyrrolidone, N-vinylcaprolactam or mixtures thereof, ii) 15 to 35% by weight of vinyl acetate, and iii) 10 to 35% by weight of a polyethylene glycol, wherein said composition is a suspension, for increasing the activity of a pesticide.

The increasing the activity of a pesticide relates to the increasing of the pesticidal activity of the pesticide. The activity is increased with regard to the activity of the pesticide in absence of the polymer under otherwise comparable conditions. Thus, the graft polymer may also be called an adjuvant, or a graft polymer with adjuvant effect.

A graft polymer is a well known type of polymer structure, which typically comprises a main polymer chain connected to polymeric side chains. The graft copolymer is obtainable (preferably it is obtained) by free-radical polymerization of the monomer mixture. Such free-radical polymerizations of monomer mixtures yielding graft copolymers are well known as laid out below.

In accordance with the present invention, the use of vinyl acetate is preferred.

In accordance with the present invention, N-vinylpyrrolidone or N-vinylcaprolactam or mixtures thereof are preferred.

Suitable and preferred is polyethylene glycol. The polyethylene glycols may have molecular weights of from 1000 to 100 000 D [daltons], preferably 1500 to 35 000 D, particularly preferably 1500 to 10 000 D. The molecular weights are determined on the basis of the OH number measured as specified in DIN 53240.

The polyethylene glycols may be terminated by hydroxy groups or alkylated on one or both terminal OH groups. Suitable alkyl radicals are branched or unbranched C₁- to C₂₂-alkyl radicals, preferably C₁-C₁₈-alkyl radicals, for example methyl, ethyl, n-butyl, isobutyl, pentyl, hexyl, octyl, nonyl, decyl, dodecyl, tridecyl or octadecyl radicals. Preferably, the polyalkylene glycols are be terminated by hydroxy groups.

The monomer mixture may comprise an additional comonomer.

Examples of suitable additional comonomers are vinylcarboxamides such as N-vinylformamide, N-vinyl-N-methylformamide, N-vinylacetamide, N-vinyl-N-methylacetamide, N-vinyl-N-methylpropionamide, and N-vinylpropionamide. It is preferred to use N-vinylformamide and/or N-vinyl-N-methylacetamide. The copolymerized monomer units of N-vinylformamide and/or N-vinyl-N-methylacetamide may be partly or fully hydrolyzed.

Suitable further additional comonomers are also monoethylenically unsaturated monocarboxylic and dicarboxylic acids or their anhydrides having 3 to 6 carbon atoms, such as acrylic acid, methacrylic acid, crotonic acid, maleic acid or anhydride, fumaric acid, itaconic acid or anhydride, and citraconic acid or anhydride.

Further suitable additional comonomers are the amides, esters, and nitriles of the aforementioned monoethylenically unsaturated C3 to C6 carboxylic acids, such as, for example, the amides acrylamide, methacrylamide, and also N-alkyl- and N,N-dialkylamides having alkyl radicals of 1 to 6 carbon atoms, such as N-methylacrylamide, N,N-dimethylacrylamide, N-methylmethacrylamide, N,N-dimethylmethacrylamide, N-ethylacrylamide, N-propylacrylamide, tert-butylacrylamide and tert-butylmethacrylamide, and also the basic (meth)acrylamides, such as 2-N,N-dimethylaminoethylacrylamide, 2-N,N-dimethylaminoethylmethacrylamide, 2-N,N-diethylaminoethylacrylamide, 2-N,N-diethylaminoethylmethacrylamide, 3-N,N-dimethylaminopropylacrylamide, 3-N,N-diethylaminopropylacrylamide, 3-N,N-dimethylaminopropylmethacrylamide and 3-N,N-diethylaminopropylmethacrylamide.

Other suitable additional comonomers are the esters of monoethylenically unsaturated carboxylic acids with C1 to C6 alcohols, such as methyl acrylate, methyl methacrylate, ethyl acrylate, and ethyl methacrylate, or with glycols or polyglycols, in each case only one OH group in the glycols and polyglycols being esterified with an ethylenically unsaturated carboxylic acid, such as hydroxyethyl acrylate, hydroxyethyl methacrylate, hydroxypropyl acrylates, hydroxybutyl acrylates, hydroxypropyl methacrylates, hydroxybutyl methacrylates, and also the (meth)acrylic monoesters of polyalkylene glycols with a molar weight of 200 to 10 000. Of further suitability are the esters of the aforementioned ethylenically unsaturated carboxylic acids with pyrrolidone derivatives, such as, for example, 2-(N-pyrrolidone)ethyl acrylate or 2-(N-pyrrolidone)ethyl methacrylate, and with amino alcohols, such as 2-N,N-dimethylaminoethyl acrylate, 2-N,N-dimethylaminoethyl methacrylate, 2-N,N-diethylaminoethyl acrylate, 2-N,N-diethylaminoethyl methacrylate, 3-N,N-dimethylaminopropyl acrylate, 3-N,N-dimethylaminopropyl methacrylate, 3-N,N-diethylaminopropyl acrylate, 3-N,N-diethylaminopropyl methacrylate, 4-N,N-dimethylaminobutyl acrylate, 4-N,N-diethylaminobutyl acrylate, 5-N,N-dimethylaminopentyl acrylate, dimethylaminoneopentyl methacrylate and 6-N,N-dimethylaminohexyl acrylate. The basic (meth)acrylates and (meth)acrylamides are used in the form of the free bases, of the salts with mineral acids, such as hydrochloric acid, sulfuric acid, and nitric acid, or in quaternized form. Examples of suitable quaternizing agents include dimethyl sulfate, methyl chloride, ethyl chloride, benzyl chloride or diethyl sulfate.

Examples of nitriles of the aforementioned ethylenically unsaturated carboxylic acid are acrylonitrile and methacrylonitrile.

Additionally suitable as additional comonomers are N-vinyl imidazole and also substituted N-vinyl imidazoles, such as N-vinyl-2-methylimidazole, N-vinyl-4-methylimidazole, N-vinyl-5-methylimidazole, and N-vinyl-2-ethylimidazole, N-vinyl imidazolines, such as N-vinyl imidazoline, N-vinyl-2-methylimidazoline, and N-vinyl-2-ethylimidazoline, and also N-vinyl imidazolidinones, such as N-vinyl-2-imidazolidinone and N-vinyl-4-methyl2-imidazolidinone. N-Vinyl imidazoles, N-vinyl imidazolines, and N-vinyl imidazolidinones are used not only in the form of the free bases but also in a form neutralized with mineral acids or in quaternized form, the quaternization being performed preferably using dimethyl sulfate, diethyl sulfate, benzyl chloride, methyl chloride or ethyl chloride.

Finally, monomers suitable as additional comonomers include those comprising sulfo groups, such as vinylsulfonic acid, allylsulfonic acid, methallylsulfonic acid, styrenesulfonic acid, 3-sulfopropyl acrylate, 3-sulfopropyl methacrylate, and 2-acrylamido-2-methylpropanesulfonic acid. The compounds containing acid groups can be used in the form of the free acids, the ammonium salts or the alkali metal and alkaline earth metal salts for the graft polymerization.

Additional comonomers may also be monomers having a crosslinking action, such as, for example, methylenebisacrylamide, esters of acrylic acid and methacrylic acid with polyhydric alcohols, examples being glycol diacrylate, glycerol triacrylate, glycol dimethacrylate, and glycerol trimethacrylate, and also polyols, such as pentaerythritol and glucose, which are esterified at least doubly with acrylic acid or methacrylic acid. Further suitable crosslinkers are divinylbenzene, divinyldioxane, N,N-divinyl-2-imidazolidinone, pentaerythritol triallyl ether, and pentaallylsucrose. Preferred crosslinking monomers c) are water-soluble monomers, such as glycol diacrylate or glycol diacrylates of polyethylene glycols with a molecular weight (numerical average) of 300 to 10000.

Among the additional comonomers N-vinyl imidazole, acrylic acid, methacrylic acid, methacrylamide, N,N-dimethylacrylamide, N-methylmethacrylamide, tert-butylacrylamide, tert-butylmethacrylamide, dimethylaminoethylmethacrylamide, hydroxyethyl acrylate, 2-(N-pyrrolidone)ethyl acrylate, 2-(N-pyrrolidone)ethyl methacrylate, and 2-acrylamido-2-methylpropanesulfonic acid are preferably employed. Advantageously in accordance with the invention, however, no monomers c) are employed.

According to one embodiment of the invention, suitable graft copolymers are obtainable from a monomer mixture comprising
i) 30 to 70% by weight of *N*-vinylpyrrolidone, *N*-vinylcaprolactam or mixtures thereof,
ii) 15 to 35% by weight of vinyl acetate, and
iii) 15 to 35% by weight of a polyethylene glycol,
and particularly preferred graft copolymers from:
i) 40 to 60% by weight of N- *N*-vinylpyrrolidone, *N*-vinylcaprolactam or mixtures thereof,
ii) 15 to 35% by weight of vinyl acetate, and
iii) 15 to 30% by weight of a polyethylene glycol.

Usually, the components i), ii), iii) and optionally the amount of the additional comonomers add up to 100 % in the monomer mixture. Preferably, the components i), ii), and iii) add up to 100 % in the monomer mixture. In a further embodiment of the invention, preferred polymers comprise from 10 to 35% by weight of a polyether. It will be appreciated that mixtures of two or more additional comonomers can also be used.

General processes for preparing the graft copolymers are known per se (e.g. from WO 2007/051743). The preparation takes place by free-radical polymerization, preferably solution polymerization, in nonaqueous organic solvents or in mixed nonaqueous/aqueous solvents. The polymerization is preferably carried out at temperatures from 60 to 100°C. Suitable nonaqueous organic solvents are, for example, alcohols such as methanol, ethanol, n-propanol and isopropanol, and glycols such as ethylene glycol and glycerol. Further suitable solvents are esters such as, for example, ethyl acetate, n-propyl acetate, isopropyl acetate, isobutyl acetate or butyl acetate.

Free-radical initiators are employed to initiate the polymerization. The amounts of initiator or initiator mixtures used, based on monomer employed, are between 0.01 and 10% by weight, preferably between 0.3 and 5% by weight. Depending on the nature of the solvent used, both organic and inorganic peroxides are suitable, such as sodium persulfate or azo initiators such as azobisisobutyronitrile, azo-bis(2-amidopropane) dihydrochloride or 2,2'-azobis(2-methylbutyronitrile). Examples of peroxide initiators are dibenzoyl peroxide, diacetyl peroxide, succinyl peroxide, tert-butyl perpivalate, tert-butyl perethylhexanoate, tert-butyl perneodecanoate, tert-butyl permaleate, bis-(tert-butylper)cyclohexane, tert-butylperisopropyl carbonate, tert-butyl peracetate, 2,2-bis(tert-butylper)butane, dicumyl peroxide, di-tert-amyl peroxide, di-tert-butyl peroxide, p-menthane hydroperoxide, pinane hydroperoxide, cumene hydroperoxide, tert-butyl hydroperoxide, hydrogen peroxide and mixtures of said initiators. Said initiators can also be used in combination with redox components such as ascorbic acid. Particularly suitable initiators are tert-butyl perneodecanoate, tert-butyl perpivalate or tert-butyl perethylhexanoate.

The free-radical polymerization can take place if appropriate in the presence of emulsifiers, if appropriate further protective colloids, if appropriate molecular weight regulators, if appropriate buffer systems and if appropriate subsequent pH adjustment using bases or acids.

Suitable molecular weight regulators are sulfhydryl compounds such as alkyl mercaptans, e.g. n-dodecyl mercaptan, tert-dodecyl mercaptan, thioglycolic acid and esters thereof, mercaptoalkanols such as mercaptoethanol. Further suitable regulators are mentioned for example in DE 197 12 247 A1, page 4. The necessary amount of the molecular weight regulators is in the range from 0 to 5% by weight based on the amount of (co)monomers to be polymerized. If regulators are used, the amount employed is in particular in the range from 0.05 to 2% by weight, particularly preferably 0.1 to 1.5% by weight. However, polymerization in the absence of a regulator is very particularly preferred.

It is also possible if appropriate to use emulsifiers, for example ionic or nonionic surfactants whose HLB is normally in the range from 3 to 13. For the definition of HLB, reference is made to the publication by W.C. Griffin, J. Soc. Cosmetic Chem., Volume 5, 249 (1954). The amount of surfactants based on the polymer can be from 0 to 10% by weight, preferably 0 to 5% by weight.

The monomer, or the monomer mixture or the emulsion of monomer(s) are introduced together with the initiator, which is generally present in solution, into a stirred reactor at the polymerization temperature (batch process) or if appropriate metered continuously or in a plurality of consecutive stages into the polymerization reactor (feed process). It is usual in the feed process for the reactor to be charged, before the start of the actual polymerization, besides the solvent (in order to make stirring of the reaction mixture possible) also with partial quantities, rarely the total quantity intended for the polymerization, of the starting materials such as emulsifiers, protective colloids, monomers, regulators etc. or partial quantities of the feeds (generally monomer feed or emulsion feed and initiator feed).

The polymerization can be carried out both under atmospheric pressure and in a closed reactor under elevated pressure. In this case it is possible to polymerize either under the pressure set up during the reaction, or the pressure can be adjusted by injecting a gas or evacuating. The pressure can also be controlled by partial decompression of the reactor into the condenser.

A nonaqueous solvent used for the polymerization can subsequently be removed and replaced by water by steam distillation. This normally entails initially the nonaqueous solvent being distilled out pure as far as possible and then being completely replaced by water by passing in steam.

After the polymerization it is possible to employ generally known processes for reducing residual monomers. Examples of such processes are further addition of an initiator at the end of the polymerization, hydrolysis of vinyllactam monomers by adding acids, treatment of the polymer solution with solid phases such as ion exchangers, feeding in a monomer which copolymerizes well, membrane filtration and further customary methods.

The solids content of the resulting aqueous polymer dispersions or solutions is usually from 10 to 70% by weight, preferably 15 to 60% by weight, particularly preferably 15 to 40% by weight.

The polymer dispersions or solutions can be converted into powder form or into granules by various drying processes such as, for example, spray drying, fluidized spray drying, drum drying, paddle drying, belt drying or freeze drying. It may be advisable during the spray drying to add additives such as, for example, colloidal silica or hydrophobically modified colloidal silica. The copolymers are obtained as aqueous dispersions or aqueous solutions or, after removal of the water content, as very free-flowing, water-dispersible or water-soluble powders.

Usually, the polymers have Fikentscher K values in the range from 10 to 60, preferably 20 to 50, more preferably from 25 to 40, measured in a 1 % by weight ethanolic solution.

The polymers may have a glas transition temperature in the range of from 30 to 12 °C, preferably from 50 to 80 °C.

The molecular weight Mw is usually in the range from 10000 to 1000000 g/mol, preferably from 30000 to 500000 g/mol, more preferably from 60000 to 300000 g/mol, measured by gel permeation chromatography.

The amount of the graft polymer is in the range of from 10 to 500 wt%, preferably from 20 to 100 wt%, based on the weight of the pesticide.

The copolymers and the compositions according to the invention are particularly important in various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferred cultivated plants are fruits, such as pomes, stone fruits or soft fruits, e. g. apples, pears, plums, peaches, almonds, cherries, strawberries, raspberries, blackberries or gooseberries; cucurbits, such as squashes, cucumber or melons; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; nuts; coffee; tea; bananas; vines (table grapes and grape juice grape vines); hop; ornamental and forestry plants, such as flowers, shrubs, broad-leaved trees or evergreens, e. g. conifers. Most preferred are vines, fruits and vegetables.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

The term "cultivated plants" is to be understood as including plants which have been modified by breeding, mutagenesis or genetic engineering including but not limiting to agricultural biotech products on the market or in development. Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

The present invention relates to a composition comprising a pesticide, wherein the pesticide is metrafenone or difenoconazole which is suspended in the aqueous composition, and a graft copolymer obtained by free-radical polymerization of a monomer mixture comprising
i) 30 to 70% by weight of N-vinylpyrrolidone, N-vinylcaprolactam or mixtures thereof,
ii) 15 to 35% by weight of vinyl acetate, and
iii) 10 to 35% by weight of a polyethylene glycol, wherein sai composition is a suspension.

Usually, the components i), ii), iii) and optionally the amount of the additional comonomers add up to 100 % in the monomer mixture. Preferably, the components i), ii), and iii) add up to 100 % in the monomer mixture. Preferred embodiments of the graft copolymer and the pesticide are as described above.

The present invention further relates to a method for preparing the composition according to the invention by mixing the pesticide and the graft copolymer. The mixing of the components may be achieved by conventional equipment at any temperature, such as room temperature. Preferred mixing methods are those which are applied to prepare agrochemical compositions.

The present invention further relates to a method for controlling phytopathogenic fungi and/or undesired plant growth and/or undesired attack by insects or mites and/or for regulating the growth of plants, where the composition according to the invention is allowed to act on the particular pests, their habitat or the plants to be protected from the particular pest, the soil and/or on undesired plants and/or the useful plants and/or their habitat.

The composition according to the invention is a suspension. Examples for composition types are suspensions (SC, OD, FS).

The pesticide is suspended in an aqueous agrochemical composition.

The agrochemical compositions may also comprise auxiliaries which are customary in agrochemical compositions. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wtters, tackifiers, dispersants or emulsifiers) are alkali metal, alkaline earth metal and ammonium salts of aromatic sulfonic acids, such as ligninsoulfonic acid (Borresperse^{®} types, Borregard, Norway) phenolsulfonic acid, naphthalenesulfonic acid (Morwet^{®} types, Akzo Nobel, U.S.A.), dibutylnaphthalene-sulfonic acid (Nekal^{®} types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol^{®} types, Clariant, Switzerland), polycarboxylates (Sokolan^{®} types, BASF, Germany), polyalkoxylates, polyvinylamines (Lupasol^{®} types, BASF, Germany), polyvinylpyrrolidone and the copolymers therof.

Examples for thickeners (i. e. compounds that impart a modified flowability to compositions, i. e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the composition. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin. Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof. Examples for tackifiers or binders are polyvinylpyrrolidons, polyvinylacetates, polyvinyl alcohols and cellulose ethers (Tylose®, Shin-Etsu, Japan).

The agrochemical compositions generally comprise between 0.01 and 95%, preferably between 0.1 and 90%, most preferably between 0.5 and 90%, by weight of active substance (e.g. pesticide). The active substances are employed in a purity of from 90% to 100%, preferably from 95% to 100% (according to NMR spectrum).

The graft copolymers or the composition according to the invention can be used as such or in the form of their compositions, e. g. in the form of directly sprayable suspensions, by means of spraying, atomizing, dusting, spreading, brushing, immersing or pouring. The application forms depend entirely on the intended purposes; it is intended to ensure in each case the finest possible distribution of the active substances according to the invention.

The active substance concentrations in the ready-to-use preparations can be varied within relatively wide ranges. In general, they are from 0.0001 to 10%, preferably from 0.001 to 1% by weight of active substance. When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.

Various types of oils, wetters, adjuvants, herbicides, bactericides, other fungicides and/or pesticides may be added to the active substances or the compositions comprising them, if appropriate not until immediately prior to use (tank mix). These agents can be admixed with the compositions according to the invention in a weight ratio of 1:100 to 100:1, preferably 1:10 to 10:1.

Adjuvants which can be used are in particular organic modified polysiloxanes such as Break Thru S 240®; alcohol alkoxylates such as Atplus 245®, Atplus MBA 1303®, Plurafac LF 300® and Lutensol ON 30®; EO/PO block polymers, e. g. Pluronic RPE 2035® and Genapol B®; alcohol ethoxylates such as Lutensol XP 80®; and dioctyl sulfosuccinate sodium such as Leophen RA®.

The copolymers and the pesticide can be used individually or already partially or completely mixed with one another to prepare the composition according to the invention. It is also possible for them to be packaged and used further as combination composition such as a kit of parts. In one embodiment of the invention, the kits may include one or more, including all, components that may be used to prepare a subject agrochemical composition. E. g., kits may include one or more pesticide and a copolymer. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i. e., not pre-formulated. As such, kits may include one or more separate containers such as vials, cans, bottles, pouches, bags or canisters, each container containing a separate component for an agrochemical composition. In both forms, a component of the kit may be applied separately from or together with the further components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquor or the agrochemical composition according to the invention is thus obtained. Usually, 50 to 500 liters of the ready-to-use spray liquor are applied per hectare of agricultural useful area, preferably 100 to 400 liters. According to one embodiment, individual components of the composition according to the invention such as parts of a kit or parts of a binary or ternary mixture may be mixed by the user himself in a spray tank and further auxiliaries may be added, if appropriate (tank mix). In a further embodiment, either individual components of the composition according to the invention or partially premixed components.

Advantages of the present invention are for example, that the composition according to the invention has an excellent stability (e.g. regarding particle size, viscosity). The graft copolymer increases the pesticidal activity of the pesticides. This adjuvant effect is achieved without decrease in the stability of the composition. The graft copolymer has a very low phytotoxicity, which is especially important for the treatment of vegetables and fruits. Such graft copolymers are easy to handle and have no adverse effects in contact to the skin, e.g. for the farmer handling the agrochemical formulations. The graft copolymer can easily produced in industrial scale for low costs. Further on, the graft polymer increases the retention of pesticides on the surface of plants.

The invention is further illustrated by the following examples.

### Reference Example

### 1 - Retention of active substances on plants

An aqueous suspension concentrate containing 300 g/l fluxapyroxad, dispersing agent, antifoamant, xanthan gum thickener, bactericide, and 1,2-propylene glycol antifreezing was prepared (called "SC Blank"). Optionally, Graft Polymer A was added. Graft Polymer A was prepared according to WO 2007051746 from 13 wt% polyethylene glycol (average molecular mass 6000 g/mol, calculated from hydroxy number), 57 wt% N-vinyl caprolactame and 30 wt% vinyl acetate, having a K-value of 35.

To measure the retention of an aqueous spray, the suspension concentrated was diluted with water and a fluorescence tracer (fluoresceine) to prepare a sprayable tank mix. Said tank mix was applied with a rate of 200 l/ha via nozzle set (nozzle type: flat fan (air induction), ID 120 02, Lechler) at a speed of 1.4 m/s with a pressure of 3.4 bar and a spray boom (1 m, 3 nozzles; nozzle distance 50 cm). The tank mix was applied to wheat (var. Melon) at the growth stage BBCH 12. After application the leaves of the plants were collected and washed with a defined amount of washing solution (0.1 mol/l NaOH). The fluorescence intensity, which is proportional to the amount of active retained on leaves, was measured with a fluorometer. Each experiment was repeated four times and the average values are given in Table 1. The data show that the retention on the plants is increased due to the Polymeric Additive A compared to formulations without this additive or compared to water.

**Table 1: Retention on plant**

| Applied composition | Spray retention on plant [Fluorescence intensity per g plant material and per ml washing solution] |
|---|---|
| Water ¹⁾ | 1070 |
| SC Blank ¹⁾ | 1228 |
| SC Blank + 0.1 % Graft Polymer A ²⁾ | 1676 |
| SC Blank + 0.2 % Graft Polymer A ²⁾ | 1896 |

| | |
|---|---|
| 1) comparative, not according to the invention. 2) concentration in tank mix. | |

### Example 2 - Increased efficacy on cucurbits

An aqueous suspension concentrate ("SC1") was prepared containing 120 g/l difenoconazol (a fungicide, water solubility 3.3 mg/L at 20 °C), 300 g/l metrafenone (a fungicide, water solubility 0.49 mg/L at 20 °C), optionally 50 g/l Graft Polymer A (see Example 1) and common auxiliaries (such as 1,2-propylene glycol, antibacterial agent, anti-foaming agent, thickener). The pesticidal activity was tested in field tests on cucurbits in Spain, which were infected with *Sphaerotheca fuliginea.* The plants were treated with SC1 at a use rate of 140 g pesticide per ha (500 I water/ha; 3 applications at 7 days intervall). The percentage of the infection (7 days after application) was summarized in Table 2. The data showed that the composition with the graft polymer according to the invention has a higher pesticidal activity compared to the control without graft polymer.

**Table 2:**

| Treatment with | % Infection |
|---|---|
| Untreated control | 65 |
| SC1 without Graft Polymer A | 13 |
| SC1 with Graft Polymer A | 8 |

### Example 3 - Increased efficacy on grapes

The aqueous suspension concentrate ("SC1") of Example 2 was used. The pesticidal activity was tested in field tests in Spain on grapes, which were infected with *Erysiphe necator.* The plants were treated with SC1 at a use rate of 84 g pesticide per ha (500 I water/ha; 5 applications at 14 days intervall). The percentage of the infection on clusters (14 days after application) was summarized in Table 3. The data showed that the composition with the graft polymer according to the invention has a higher pesticidal activity compared to the control without graft polymer.

**Table 3:**

| Treatment with | % Infection |
|---|---|
| Untreated control | 85 |
| SC1 without Graft Polymer A | 22 |
| SC1 with Graft Polymer A | 0.8 |

### Example 4 - Increased efficacy on grapes

The pesticidal activity was tested as decribed in Example 3 in field tests in another location in Spain on grapes, which were infected with *Erysiphe necator.* The plants were treated with SC1 at a use rate of 280 g pesticide per ha (500 I water/ha; 6 ; applications at 14 days intervall). The percentage of the infection on clusters (14 days after application) was summarized in Table 4. The data showed that the composition with the graft polymer according to the invention has a higher pesticidal activity compared to the control without graft polymer.

**Table 4:**

| Treatment with | % Infection |
|---|---|
| Untreated control | 100 |
| SC1 without Graft Polymer A | 2.7 |
| SC1 with Graft Polymer A | 1.0 |

## Claims

1. An aqueous agrochemical composition comprising a pesticide, wherein the pesticide is metrafenone or difenoconazole which is suspended in the aqueous composition, and a graft copolymer obtained by free-radical polymerization of a monomer mixture comprising
i) 30 to 70% by weight of N-vinylpyrrolidone, N-vinylcaprolactam or mixtures thereof,
ii) 15 to 35% by weight of vinyl acetate, and
iii) 10 to 35% by weight of a polyethylene glycol,
wherein said composition is a suspension.

2. The composition according to claim 1, where the amount of the graft polymer is in the range of from 10 to 500 wt%, based on the weight of the pesticide.

3. A method for preparing the composition as defined in claim 1 or 2 by mixing the pesticide and the graft copolymer.

4. A method for controlling phytopathogenic fungi where the composition as defined in claim 1 or 2 is allowed to act on the particular pests, their habitat or the plants to be protected from the particular pest and/or the soil.

## Patentansprüche

1. Wässrige agrochemische Zusammensetzung, umfassend ein Pestizid, wobei es sich bei dem Pestizid um Metrafenon oder Difenoconazol handelt, das in der wässrigen Zusammensetzung suspendiert ist, und ein durch radikalische Polymerisation einer Monomerenmischung, umfassend
i) 30 bis 70 Gew.-% N-Vinylpyrrolidon, N-Vinyl-caprolactam oder Mischungen davon,
ii) 15 bis 35 Gew.-% Vinylacetat und
iii) 10 bis 35 Gew.-% eines Polyethylenglykols,
erhaltenes Pfropfcopolymer, wobei es sich bei der Zusammensetzung um eine Suspension handelt.

2. Zusammensetzung nach Anspruch 1, wobei die Menge des Pfropfpolymers im Bereich von 10 bis 500 Gew.-%, bezogen auf das Gewicht des Pestizids, liegt.

3. Verfahren zur Herstellung der Zusammensetzung gemäß Anspruch 1 oder 2 durch Mischen des Pestizids und des Pfropfcopolymers.

4. Verfahren zur Bekämpfung von phytopathogenen Pilzen, bei dem man die Zusammensetzung gemäß Anspruch 1 oder 2 auf die jeweiligen Schädlinge, deren Lebensraum oder die vor dem jeweiligen Schädling zu schützenden Pflanzen und/oder den Boden einwirken lässt.

## Revendications

1. Composition agrochimique aqueuse comprenant un pesticide, dans laquelle le pesticide est la métrafénone ou le difénoconazole qui est mis en suspension dans la composition aqueuse, et un copolymère greffé obtenu par polymérisation radicalaire d'un mélange de monomères comprenant
i) de 30 à 70% en poids de N-vinylpyrrolidone, de N-vinylcaprolactame, ou de mélanges de ceux-ci,
ii) de 15 à 35% en poids d'acétate de vinyle, et
ii) de 10 à 35% en poids d'un polyéthylène glycol,
**caractérisée en ce que** ladite composition est une suspension.

2. Composition selon la revendication 1, **caractérisée en ce que** la quantité de polymère greffé se trouve dans la plage allant de 10 à 500% en poids, sur la base du poids du pesticide.

3. Méthode de préparation de la composition telle que définie selon la revendication 1 ou 2, par le mélange du pesticide et du copolymère greffé.

4. Méthode de contrôle de champignons phytopathogènes, **caractérisée en ce qu'**on permet à la composition telle que définie selon la revendication 1 ou 2 d'agir sur les nuisibles particuliers, leur habitat ou les plantes à protéger contre les nuisibles particuliers et/ou le sol.
